(19) Europäisches Patentamt
European Patent Office
Office européen des brevets

(11) **EP 1 675 760 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
***B60S 9/10*** *(2006.01)*   ***B66C 23/80*** *(2006.01)*
***G01L 1/22*** *(2006.01)*

(21) Anmeldenummer: **04790386.9**

(22) Anmeldetag: **14.10.2004**

(86) Internationale Anmeldenummer:
**PCT/EP2004/011523**

(87) Internationale Veröffentlichungsnummer:
**WO 2005/042319 (12.05.2005 Gazette 2005/19)**

(54) **MOBILES ARBEITSGERÄT MIT STÜTZAUSLEGERN**

MOVEABLE WORKING DEVICE WITH SUPPORTING EXTENSION ARMS

ENGIN DE TRAVAIL MOBILE A STABILISATEURS

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.10.2003 DE 10349234**

(43) Veröffentlichungstag der Anmeldung:
**05.07.2006 Patentblatt 2006/27**

(60) Teilanmeldung:
**06025766.4 / 1 772 333**

(73) Patentinhaber: **PUTZMEISTER Aktiengesellschaft**
**72631 Aichtal (DE)**

(72) Erfinder: **GELIES, Stephan**
**39124 Magdeburg (DE)**

(74) Vertreter: **WOLF & LUTZ**
**Patentanwälte,**
**Hauptmannsreute 93**
**70193 Stuttgart (DE)**

(56) Entgegenhaltungen:
**WO-A-02/075076          DE-C- 3 500 891**
**GB-A- 2 187 432          NL-A- 9 401 892**
**US-A- 3 713 129**

- **PATENT ABSTRACTS OF JAPAN Bd. 2000, Nr. 07, 29. September 2000 (2000-09-29) -& JP 2000 095074 A (AICHI CORP), 4. April 2000 (2000-04-04)**
- **PATENT ABSTRACTS OF JAPAN Bd. 016, Nr. 272 (P-1373), 18. Juni 1992 (1992-06-18) & JP 04 070528 A (TOSHIBA ENG CO LTD), 5. März 1992 (1992-03-05)**

**Beschreibung**

Die Erfindung betrifft ein mobiles Arbeitsgerät, insbesondere eine Autobetonpumpe, mit einem Fahrgestell, mit zwei vorderen und zwei rückwärtigen, von einer Fahrstellung in mindestens eine Abstützstellung ausfahrbaren und mit je einem teleskopierbaren Stützbein auf einer Unterlage abstützbaren Stützauslegern und mit je einem Messglied zur Bestimmung der Stützkraft in den Stützbeinen, wobei die teleskopierbaren Stützbeine mit einem auslegerfesten Teleskopglied mittels eines Anlenkbolzens an einem Stützbeinkasten angelenkt sind, und der Anlenkbolzen als Messglied zur Bestimmung der Stützlast ausgebildet ist.

Mobile Arbeitsgeräte dieser Art sind mit ausfahrbaren Stützauslegern versehen, die am Einsatzort die Standfestigkeit des Arbeitsgeräts verbessern sollen. Die Stützausleger haben dabei einerseits die Aufgabe, die Fahrzeugfederung zu eliminieren und die Räder zu entlasten. Zum anderen sollen die Stützausleger die Kippgefahr mindern, die sich ergibt, wenn über einen Arbeitsausleger hohe Kippmomente entstehen. Die Stützbeine der Stützausleger bilden die Ecken eines Vierecks, dessen Seitenlinien eine Fläche umschreiben, innerhalb welcher der Gesamtschwerpunkt des Arbeitsgeräts liegen muss, um die Standsicherheit zu gewährleisten. Da der auskragende Arbeitsausleger drehbar ist, beschreibt der Gesamtschwerpunkt bei einer Drehung einen Vollkreis, der im Arbeitsbereich des Arbeitsauslegers innerhalb der Viereckfläche liegen muss. Da die Platzverhältnisse auf den Baustellen beengt sind, wird oft auf eine Vollabstützung verzichtet. Dadurch wird der Schwenkbereich des Arbeitsauslegers begrenzt.

Um die Kippsicherung zu gewährleisten, wurde bereits eine Überwachungseinrichtung vorgeschlagen (Zeitschrift "Beton" 6/96, Seiten 362, 364). Dort werden die in den vier hydraulisch betätigten Teleskopen der Stützbeine herrschenden Drücke überwacht. Lässt der Druck in zwei Stützbeinzylindern nach, werden die Mastbewegungen und die Betonpumpe abgeschaltet. Diese Technik lässt sich auch für den Fall nutzen, dass eine Maschine aus Platzgründen nicht voll abgestützt ist. Untersuchungen haben gezeigt, dass Druckmessungen in den Teleskopzylindern der Stützbeine für eine zuverlässige Stützbeinüberwachung nicht ausreichen. Dies gilt vor allem dann, wenn einer der Teleskopzylinder auf Anschlag gefahren ist. Auch dynamische Abstützeffekte lassen sich mit diesem Überwachungssystem nicht erfassen.

Um diese Nachteile zu vermeiden, wurde schon vorgeschlagen (DE-A 101 10 176), dass im Fußteil eines jeden Stützbeins ein Kraftsensorpaar angeordnet ist. Dazu ist ein eigens hierfür konstruierter Stützfuß erforderlich, der in seiner Konstruktion recht aufwendig ist. Weiter ist dort jeder Kraftsensor in einem elektrischen Messkreis zur Abgabe eines stützlastabhängigen Messsignals angeordnet, wobei die Überwachungseinrichtung eine Auswerteelektronik umfasst, die in vorgegebenen Abtastzyklen mit den stützfußbezogenen Stützlast-Messwerten und zu deren Vergleich mit mindestens einem vorgegebenen stabilitätsbestimmenden Schwellenwert beaufschlagbar ist. Die Auswerteelektronik umfasst eine Softwareroutine zur Ermittlung des zweitniedrigsten stützfußbezogenen Stützlast-Messwerts eines jeden Abtastzyklus und zu dessen Vergleich mit einem stabilitätsbestimmenden Schwellenwert. Als nachteilig wird dabei angesehen, dass der Schwellenwert eine konstruktionsabhängige, dimensionsbelastete Größe ist und dass für die Bestimmung der stabilitätsrelevanten Lastwerte eine hohe Messgenauigkeit auch bei niedrigen Lasten erforderlich ist.

Weiter ist es bei einem mobilen Arbeitsgerät der eingangs angegebenen Art bekannt (JP-A-2000095074), dass die teleskopierbaren Stützbeine mit einem auslegerfesten Teleskopglied mittels eines Anlenkbolzens an einem Stützbeinkasten angelenkt sind und dass der Anlenkbolzen als Messglied zur Bestimmung der Stützlast ausgebildet ist.

Ausgehend hiervon liegt der Erfindung die Aufgabe zugrunde, den als Messglied ausgebildeten Anlenkbolzen zur Bestimmung der Stützkraft in den Stützbeinen auf die Weise zu gestalten, dass er auch in schon vorhandenen Stützbeinen nachgerüstet werden kann und eine einfache Messmethode ermöglicht.

Zur Lösung dieser Aufgabe werden die in den Patentansprüchen 1 und 3 angegebenen Merkmalskombinationen vorgeschlagen. Vorteilhafte Ausgestaltungen und Weiterbildungen der Erfindung ergeben sich aus den abhängigen Ansprüchen.

Eine erste Ausführungsvariante der Erfindung sieht vor, dass eine Einrichtung zur Bestimmung der beim Abstützvorgang auftretenden elastischen Biegung des Anlenkbolzens als Maß für die stützbeinbezogene Stützlast vorgesehen ist, wobei der Anlenkbolzen zwei bezüglich einer Biegeebene einander gegenüberliegende, nach entgegengesetzten Seiten offene Längsnuten zur Aufnahme von jeweils zwei Dehnmessstreifen enthält und wobei die Anschlüsse der Dehnmessstreifen in einer als Brückenschaltung ausgebildeten Messschaltung miteinander verbunden sind. Weiter enthält der Anlenkbolzen zweckmäßig eine einseitig offene Zentralbohrung sowie eine von der mindestens einen Längsnut zur Zentralbohrung verlaufende Querbohrung zur Aufnahme eines Messkabels.

Gemäß einer zweiten Ausführungsvariante der Erfindung ist eine Einrichtung zur Bestimmung der beim Abstützvorgang im Bereich der Lagerstellen des Anlenkbolzens auftretenden elastischen Scherverformung als Maß für die stützbeinbezogene Stützlast vorgesehen, wobei der Anlenkbolzen im Bereich der Lagerstellen mindestens einen in Abstützrichtung quer zur Bolzenachse durchgehenden Durchbruch aufweist, in welchem eine mit dem Bolzenmaterial vorzugsweise einstückig verbundene Membran angeordnet ist, die mindestens einen Dehnmessstreifens trägt.

Bevorzugt weist der Anlenkbolzen an beiden Lagerstellen je einen Durchbruch mit Membran auf, wobei die Membran in der Scherebene zwischen einem Innen- und Außenlager des Stützbeins angeordnet ist. Das Außenlager bildet eine Abstützung für den Bolzen im Stützbeinkasten, während am Innenlager das feststehende Teleskopteil abgestützt ist. Auf den einander abgewandten Breitseitenflächen der Membran ist zweckmäßig jeweils ein parallel zur Scherebene verlaufender Dehnmessstreifen angeordnet, wobei die Dehnmessstreifen in einer vorzugsweise als Brückenschaltung ausgebildeten Messschaltung miteinander verbunden sind.

In beiden Ausführungsvarianten ist die Messschaltung ausgangsseitig über einen Signalverstärker an eine computergestützte Auswerteelektronik angeschlossen.

Eine vorteilhafte Ausgestaltung der Erfindung sieht vor, dass die Auswerteelektronik eine Softwareroutine zur Bestimmung einer Standsicherheitszahl aus dem Quotienten aus der Gesamtsumme der Stützlastmesswerte aller Stützbeine und einer Teilsumme der Stützlastmesswerte der beiden augenblicklich höchstbelasteten Stützbeine sowie eine Alarmroutine zur Auslösung eines Alarmzustands bei Unterschreiten eines vorgegebenen Schwellenwerts für die Standsicherheitszahl aufweist. Die erfindungsgemäße Anordnung erlaubt eine Echtzeitüberwachung der Stützlast im Bereich der einzelnen Stützbeine in einem engen Zeitraster, so dass auch dynamische Effekte und Trägheitseffekte beim Betrieb des Arbeitsgeräts in die Überwachung einbezogen werden können.

Um ein Umkippen des Arbeitsgeräts im Betrieb zu verhindern, sind mehrere abgestufte alarmauslösende Schwellenwerte für die Standsicherheitskontrolle vorgesehen. Bei Unterschreiten eines ersten Schwellenwerts wird der Maschinist über ein akustisches und/oder optisches Signal gewarnt. Bei Unterschreiten eines zweiten, gegenüber dem ersten niedrigeren Schwellenwerts ist eine lösbare Blockierung der lastverschiebenden Arbeitsbewegung auslösbar. Schließlich wird bei Unterschreiten eines dritten, gegenüber dem zweiten niedrigeren Schwellenwerts eine unlösbare Blockierung der lastverschiebenden Arbeitsbewegung ausgelöst.

Im Folgenden wird die Erfindung anhand eines in der Zeichnung in schematischer Weise dargestellten Ausführungsbeispiels näher erläutert. Es zeigen

Fig. 1     eine Ansicht einer am Straßenrand abgestellten Autobetonpumpe mit auf der Straßenseite schmal abgestützten Stützauslegern;

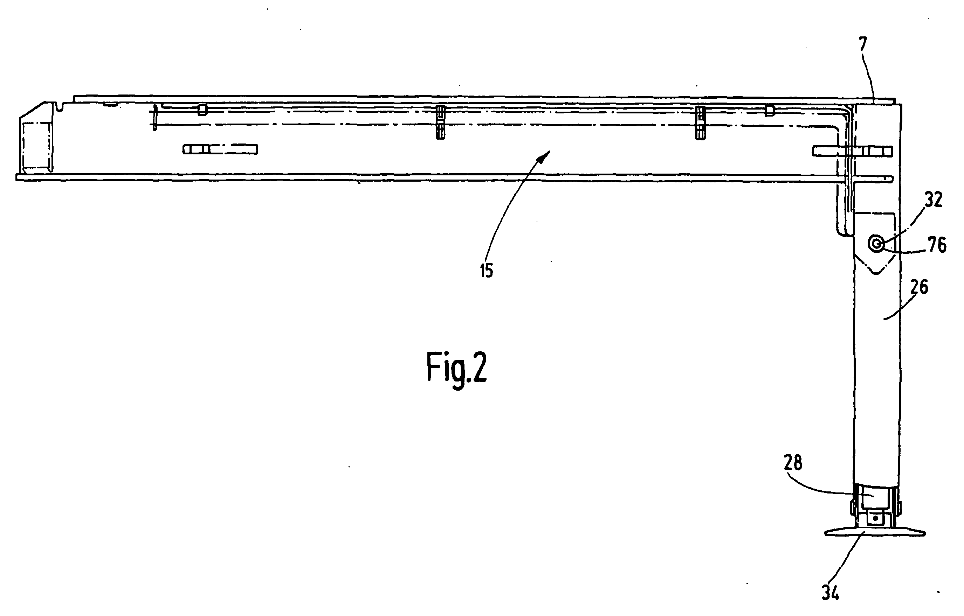

Fig. 2     eine Seitenansicht eines Stützauslegers;

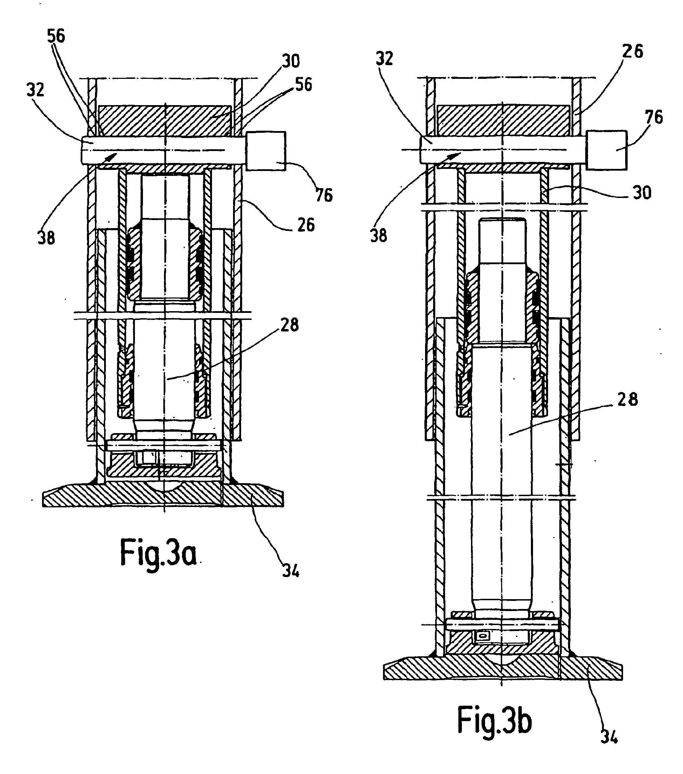

Fig. 3a    und b ein Stützbein mit als Messglied ausgebildetem Anlenkbolzen im eingefahrenen und ausgefahrenen Zustand;

Fig. 4a    und b eine Draufsicht und eine Schnittdarstellung eines Anlenkbolzens als Biegebalken;

Fig. 5a    und b eine Draufsicht und eine Schnittdarstellung einer zweiten Variante eines Anlenkbolzens als Biegebalken;

Fig. 6a    und b einen Längsschnitt und einen Querschnitt eines Anlenkbolzens als Scherbolzen;

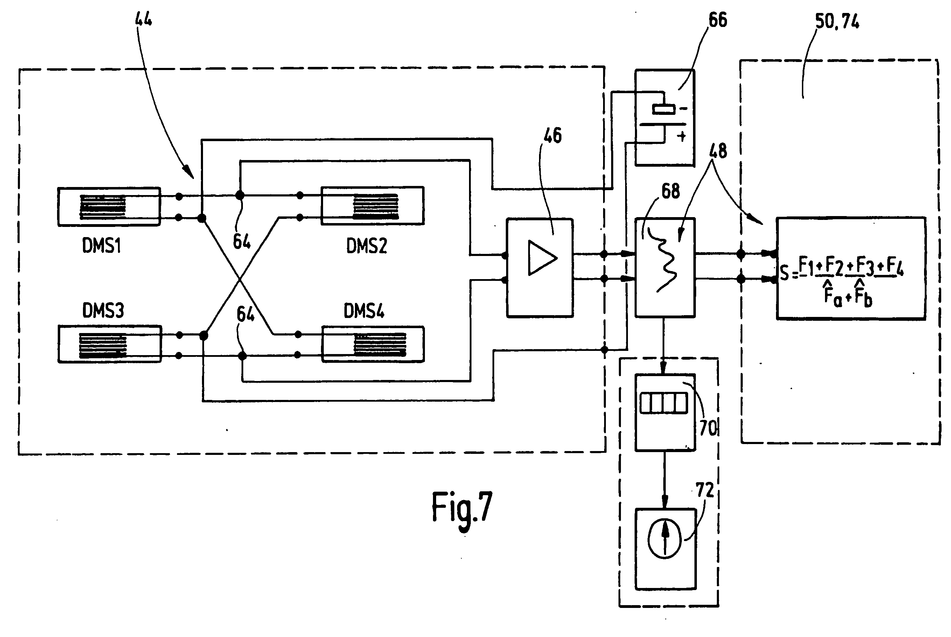

Fig. 7     eine Schaltungsanordnung in schematischer Darstellung für jeweils vier Dehnmessstreifen in einer Brückenschaltung mit computergestützter Auswerteelektronik.

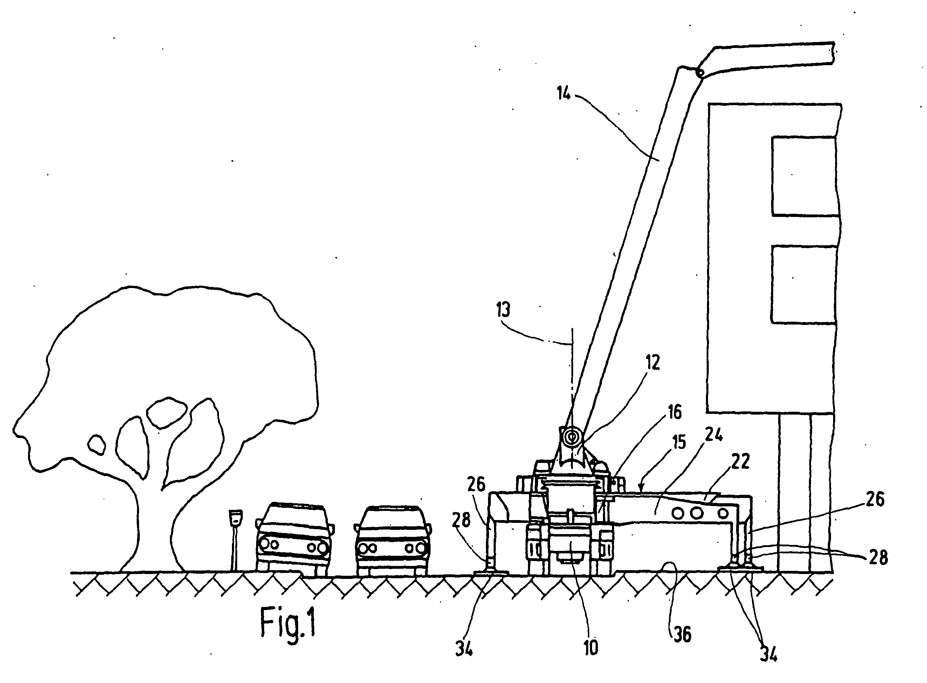

Die in Fig. 1 dargestellte fahrbare Betonpumpe besteht im wesentlichen aus einem mehrachsigen Fahrgestell 10, einem an einem vorderachsnahen Mastbock 12 um eine fahrgestellfeste Hochachse 13 drehbar gelagerten, als Betonverteilermast ausgebildeten Arbeitsausleger 14 und einer Stützkonstruktion 15, die einen vorderen und einen rückwärtigen Stützausleger 22, 24 aufweist. Die Stützausleger 22, 24 weisen einen nach unten gerichteten Stützbeinkasten 26 auf, in welchen jeweils ein teleskopierbares Stützbein 28 mit seinem auslegerfesten Teleskopglied 30 befestigt ist. Die Stützbeine 28 sind mit einer Fußplatte 34 auf dem Untergrund 36 abstützbar. Die vorderen und rückwärtigen Stützausleger 22, 24 sind mit hydraulischen Mitteln von einer fahrgestellnahen Fahrstellung in eine Abstützstellung ausfahrbar. Bei dem in Fig. 1 gezeigten Beispiel wurde auf der Straßenseite eine Schmalabstützung gewählt. Die Schmalabstützung, mit der den Platzproblemen auf Baustellen Rechnung getragen werden kann, führt zwangsläufig zu einer Einschränkung im Drehwinkel des Verteilermasts 14.

Die vier auf dem Boden aufstehenden Stützbeine 28 spannen ein Viereck auf, dessen Seiten jeweils eine Kippkante bilden. Zur Gewährleistung der Standsicherheit dürfen die Viereckseiten beim Verfahren des Verteilermasts 14 vom Gesamtschwerpunkt des Systems nicht nach außen überschritten werden. Die Erfindung macht von der Erkenntnis Gebrauch, dass die Lage des Gesamtschwerpunkts innerhalb des Kippvierecks durch Messglieder 38 innerhalb der Stützbeine 28 überwacht werden kann. Dementsprechend ist in jedem Stützbein 28 ein Messglied 38 angeordnet, das bei den gezeigten Ausführungsbeispielen jeweils vier Dehnmessstreifen DMS1 bis DMS4 mit zugehörigem elektrischem Messkreis 44 und Operationsverstärker 46 umfasst. Jeder Messkreis 44 gibt über seinen Verstärker 46 ein in vorgegebenen Zeitzyklen abtastbares, stützlastabhängiges Messsignal ab, dass in einer Auswerteelektronik 48 mit angeschlossenem Bordrechner 50 verarbeitet wird.

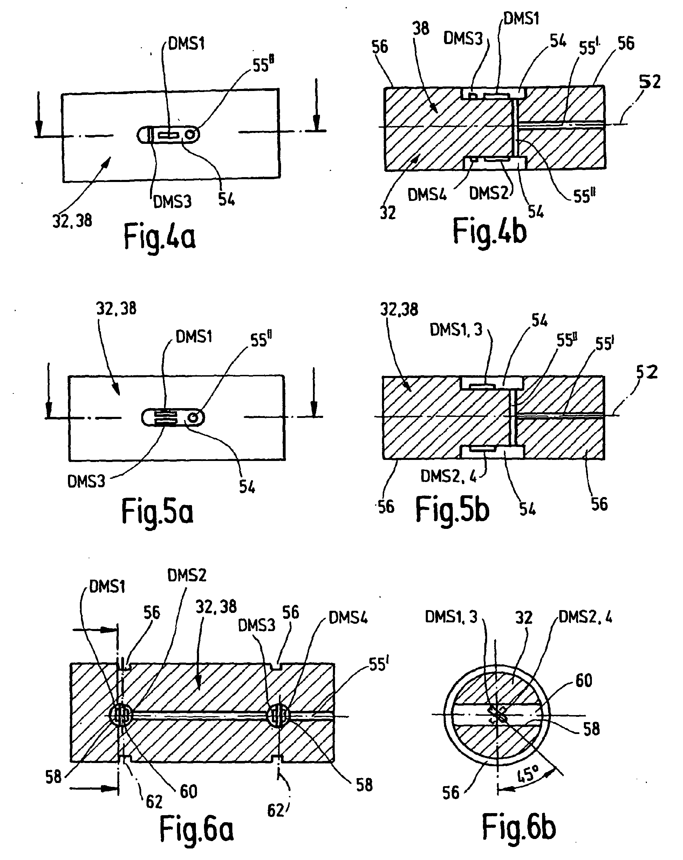

Eine Besonderheit der Erfindung besteht darin, dass die Messglieder zur Bestimmung der stützbeinbezogenen Stützlasten durch die Anlenkbolzen 32 gebildet sind. Im Falle der in den Figuren 4 und 5 gezeigten Ausführungsbeispiele enthält das Messglied 38 eine Einrichtung zur Bestimmung der beim Abstützvorgang auftretenden elastischen Biegung des Anlenkbolzens als Maß für die stützbeinbezogene Stützlast. Zu diesem Zweck weist der Anlenkbolzen 32 zwei bezüglich einer Biegeebene 52 einander gegenüberliegende, nach entgegengesetzten Seiten offene Längsnuten 54 zur Aufnahme von jeweils zwei Dehnmessstreifen DMS1, DMS3 bzw. DMS2, DMS4 auf, wobei beim Ausführungsbeispiel nach Fig. 4 die Dehnmessstreifen in den Längsnuten 54 parallel nebeneinander in Längsrichtung des Anlenkbolzens 32 angeordnet sind, während im Ausführungsbeispiel nach Fig. 5 in den Längsnuten jeweils ein parallel und ein quer zur Längsrichtung des Anlenkbolzens 32 ausgerichteter Dehnmessstreifen angeordnet ist.

Bei dem in Fig. 6 gezeigten Ausführungsbeispiel umfassen die Messglieder 38 eine Einrichtung zur Bestimmung der beim Abstützvorgang im Bereich der Lagerstellen 56 der Anlenkbolzen 32 auftretenden elastischen Scherverformung als Maß für die stützbeinbezogene Stützlast. Zu diesem Zweck weisen die Anlenkbolzen 38 im Bereich der Lagerstellen 56 jeweils einen Durchbruch 58 auf, in dem eine mit dem Bolzenmaterial einstückig verbundene Membran 60 angeordnet ist. Die Membran ist dabei in Richtung der Stützlast in der Scherebene 62 zwischen Innen- und Außenlager des Stützbeins 28 angeordnet. Auf den beiden abgewandten Breitseitenflächen der Membran ist jeweils ein parallel zur Scherebene 62 schräg zur Abstützrichtung verlaufender Dehnmessstreifen DMS1, DMS2 bzw. DMS3, DMS4 angeordnet, die sich paarweise unter einem Winkel vom 90˚ kreuzen.

Die Dehnmessstreifen DMS1 bis DMS4 der Ausführungsvarianten sind in einer als Brückenschaltung ausgebildeten Messschaltung 44 miteinander verbunden, deren Diagonalabgriffe 64 an die Eingänge des Operationsverstärkers 46 angeschlossen sind. Die Stromversorgung der Messschaltung 44 erfolgt über eine Hilfsstromquelle 66. Die Ausgangssignale der Messschaltung 44 werden über eine Signalverarbeitungsschaltung 68 einer digitalen oder analogen Anzeige 70, 72 zugeleitet. Außerdem werden die Ausgangssignale einem Bordcomputer 74 zur weiteren Auswertung, insbesondere zu einer Standsicherheitsüberwachung, zugeführt. Die Messelektronik 44 mit der Signalverarbeitungsschaltung 68 befindet sich jeweils in einem Gehäuse 76, das am einen Ende des jeweiligen Anlenkbolzens 32 nach außen über den Stützbeinkasten 26 übersteht. Der Anlenkbolzen 32 enthält zu diesem Zweck eine einseitig offene Zentralbohrung 55' sowie eine von der mindestens einen Längsnut 54 zur Zentralbohrung verlaufende Querbohrung 55" zur Aufnahme eines in das Gehäuse 76 geführten Messkabels.

Bei der Standsicherheitsüberwachung spielen die folgenden Überlegungen eine wichtige Rolle: Die Standsicherheit einer Autobetonpumpe ergibt sich aus den Gleichgewichtsbedingungen eines räumlichen Kraftsystems. Kräfte unterschiedlicher Wirkungsrichtung sind dabei z. B. zeitlich und örtlich veränderliche Eigen- und Betriebslasten, Massekräfte aus Beschleunigungs- und Abbremsvorgängen oder in Kraft und Größe zufällig angreifende Windlasten. Die Wirkung dieser Einflussgrößen steht im Gleichgewicht mit der momentanen Größe der Stützbeinkräfte.

Wie vorstehend ausgeführt, kann die Stützbeinkraft über das Messprinzip eines Biegebalkens oder über eine Scherkraftmessung bestimmt werden. Die Information über die momentane Größe aller vier Stützbeinkräfte wird mit einer gleichmäßigen Abtastrate an den Bordrechner 74 zum Beispiel über Kabel oder telemetrisch übertragen. Im Bordrechner 74 werden die einlaufenden Kraftwerte parallel verrechnet. Dazu wird zunächst die Summe aller Stützbeinkräfte $F_i$ (i = 1 bis 4) bestimmt. Zur Ermittlung einer Standsicherheitszahl S wird dieser Summenwert durch die Summe der beiden momentan größten Stützbeinkräfte $\hat{F}_a$ und $\hat{F}_b$ geteilt:

$$S = \frac{F_1 + F_2 + F_3 + F_4}{\hat{F}_a + \hat{F}_b}$$

Erreicht die Summe der beiden höchsten Stützbeinkräfte die Summe aller Stützbeinkräfte, kommt die Maschine aus dem stabilen Gleichgewicht, z. B. einer Dreipunktabstützung, in ein instabiles Gleichgewicht und ist nicht mehr standsicher. Das Kräftegleichgewicht entspricht einem Momentengleichgewicht um eine der vorstehend beschriebenen Kippkanten. Durch Festlegung einer maschinenunabhängigen Standsicherheitszahl, z. B.

$$S \geq 1,1,$$

kann unabhängig vom Maschinentyp, von der Stützbeinstellung, der Windlast und anderen variablen Parametern eine gleichbleibende Grenzstandsicherheit erreicht werden.

Eine wichtige Randbedingung für eine sichere Abstützung ist ein Aufstellen des Arbeitsgeräts mit vom Untergrund 36 abgehobenen Rädern des Fahrgestells 10. Für jedes Arbeitsgerät ist durch Wiegen das Minimalgewicht für eine ausreichende Standsicherheit bekannt. Dieser Wert kann im Bordrechner 74 hinterlegt werden. Nach Ausfahren der Stützbeine 28 vor dem Anheben des Arbeitsauslegers 14 kann nunmehr durch Messung der Stützbeinkräfte das aktuelle Maschinengewicht bestimmt und mit dem hinterlegten Sollwert verglichen werden. Bei Unterschreitung des Sollwerts stehen noch Räder des Fahrgestells 10 auf dem Boden auf, so dass die Standsicherheit nicht ausreichend gewährleistet ist. Ein Freischalten des Arbeitsauslegers 14 wird durch die Maschinensteuerung erst dann ermöglicht, wenn das gemessene Maschinengewicht den hinterlegten Sollwert erreicht oder überschreitet.

Um ein Umkippen der Maschine im Betrieb zu verhindern, werden drei Schwellenwerte $S_1$, $S_2$, $S_3$ unterschieden. Bei Erreichen des ersten Schwellenwertes $S_1$ (z.B. $S_1 = 1,25$) wird der Maschinist über ein optisches oder akustisches Signal darüber informiert, dass sich der Arbeitsausleger 14 beim weiteren Verfahren der Standsicherheitsgrenze nähert. Fährt der Maschinist weiter in den standsicherheitsgefährdeten Bereich, werden bei Erreichen eines zweiten Schwellenwertes $S_2$ (z.B. $S_2 = 1,1$) die Antriebe des Arbeitsauslegers 14 abgeschaltet. Durch Lösen einer Sperrfunktion, z. B. an einer Fernbedienung, kann der Arbeitsausleger 14 wieder freigegeben werden. Da ein Weiterfahren des Arbeitsauslegers 14 aus der kritischen Lage durch Betätigen verschiedener Antriebsaggregate des Arbeitsauslegers 14 möglich bleiben muss, ist eine Kopplung der Standsicherheitsüberwachung mit akustischen/optischen Signalen erforderlich. Möglich ist hierbei auch das Einrichten einer Steuerungsfunktion, bei der bestimmte Antriebsaggregate des Arbeitsauslegers 14 entweder gesperrt bleiben oder nur in einer Richtung freigegeben werden. Dazu sind in Abhängigkeit von der Betätigungsart des Arbeitsauslegers 14, beispielsweise von der Faltungsart eines Betonverteilermastes, verschiedene Strategien erforderlich.

Im ungünstigsten Fall fährt der Maschinist jedoch weiter in den standsicherheitsgefährdeten Bereich. Bei Erreichen des der Standsicherheitszahl entsprechenden Grenzwertes $S_3$ (z.B. $S_3 = 1,05$) muss nunmehr der Antrieb des Arbeitsauslegers 14 völlig gesperrt werden. Eine Freigabe ist nur dann möglich, wenn durch zusätzliche Ballastierung des Unterbaus, z. B. durch Anhängen von Fanggewichten an die Stützbeine 28, Volltanken einzelner als Tank ausgebildeter Stützbeine 28, Trimmen des Arbeitsgeräts durch Umpumpen des Tankinhalts von einem zum anderen Stützbein 28, wieder ein dem höheren Schwellenwert $S_2$ entsprechender Gleichgewichtszustand erreicht wird.

Zusammenfassend ist folgendes festzuhalten: Die Erfindung bezieht sich auf ein mobiles Arbeitsgerät, insbesondere eine Autobetonpumpe, mit einem Fahrgestell 10, mit zwei vorderen und zwei rückwärtigen, von einer Fahrstellung in mindestens eine Abstützstellung ausfahrbaren und mit je einem teleskopierbaren Stützbein 28 auf einem Untergrund 36 abstützbaren Stützauslegern 22, 24 und mit je einem Messglied 38 zur Bestimmung der in den Stützbeinen 28 angreifenden Stützlast. Wenn die teleskopierbaren Stützbeine 28 mit ihrem auslegerfesten Teleskopglied mittels eines Anlenkbolzens 32 an einem Stützbeinkasten 26 angelenkt sind, ist es mit besonders einfachen Mitteln möglich, dass der Anlenkbolzen als Messglied 38 zur Bestimmung der Stützlast ausgebildet ist. Die Messglieder können in eine Einrichtung zur Überwachung der Standsicherheit einbezogen werden, die eine computergestützte Auswerteelektronik 68, 74 umfasst. Für die Standsicherheitskontrolle ist eine Softwareroutine zur Bestimmung einer Standsicherheitszahl S vorgesehen, die aus dem Quotienten der Gesamtsumme der Stützlastmesswerte aller Stützbeine 28 und einer Teilsumme der Stützlastmesswerte der beiden augenblicklich höchstbelasteten Stützbeine 28 bestimmt wird. Weiter ist eine Alarmroutine zur Auslösung eines Alarmzustands bei Unterschreitung eines vorgegebenen Schwellenwerts $S_1$, $S_2$, $S_3$ für die Standsicherheitszahl S vorgesehen.

**Patentansprüche**

1. Mobiles Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem teleskopierbaren Stützbein (28) auf einem Untergrund (36) abstützbaren Stützauslegern (22, 24) und mit je einem Messglied (38) zur Bestimmung der Stützkraft in den Stützbeinen (28), wobei die teleskopierbaren Stützbeine (28) mit einem auslegerfesten Teleskopglied (30) mittels eines Anlenkbolzens (32) an einem Stützbeinkasten (26) angelenkt sind, und der Anlenkbolzen (32) als Messglied (38) zur Bestimmung der Stützlast ausgebildet ist, **gekennzeichnet durch** eine Einrichtung zur Bestimmung der beim Abstützvorgang auftretenden elastischen Biegung des Anlenkbolzens (32) als Maß für die stützbeinbezogene Stützlast, wobei der Anlenkbolzen (32) zwei bezüglich einer Biegeebene (52) einander gegenüberliegende, nach entgegengesetzten Seiten offene Längsnuten (54) zur Aufnahme von jeweils zwei Dehnmessstreifen (DMS1, DMS3 bzw. DMS2, DMS4) aufweist, und die Anschlüsse der Dehnmessstreifen in einer als Brückenschaltung ausgebildeten Messschaltung (44) miteinander verbunden sind.

2. Arbeitsgerät nach Anspruch 1, **dadurch gekennzeichnet, dass** der Anlenkbolzen (32) eine einseitig offene Zentralbohrung (55') sowie eine von der mindestens einen Längsnut (54) zur Zentralbohrung verlaufende Querbohrung (55") zur Aufnahme eines Messkabels aufweist.

3. Mobiles Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem teleskopierbaren Stützbein (28) auf einem Untergrund (36) abstützbaren Stützauslegern (22, 24) und mit je einem Messglied (38) zur Bestimmung der Stützkraft in den Stützbeinen (28), wobei die teleskopierbaren Stützbeine (28) mit einem auslegerfesten Teleskopglied (30) mittels eines Anlenkbolzens (32) an einem Stützbeinkasten (26) angelenkt sind, und der Anlenkbolzen (32) als Messglied (38) zur Bestimmung der Stützlast ausgebildet ist, **gekennzeichnet durch** eine Einrichtung zur Bestimmung der beim Abstützvorgang im Bereich von Lagerstellen (56) des Anlenkbolzens (32) auftretenden elastischen Scherverformung als Maß für die stützbeinbezogene Stützlast, wobei der Anlenkbolzen (32) im Bereich der Lagerstellen (56) mindestens einen in Abstützrichtung weisenden Durchbruch (58) aufweist, in dem eine mit dem Bolzenmaterial verbundene Membran (60) angeordnet ist, die mindestens einen Dehnmessstreifen (DMS1 bis DMS4) trägt.

4. Arbeitsgerät nach Anspruch 3, **dadurch gekennzeichnet, dass** die Membran einstückig mit dem Bolzenmaterial verbunden ist.

5. Arbeitsgerät nach Anspruch 3 oder 4, **dadurch gekennzeichnet, dass** der Anlenkbolzen (32) an beiden Lagerstellen (56) je einen Durchbruch (58) mit Membran (60) aufweist, wobei die Membran in der Scherebene (62) zwischen einem Innen- und einem Außenlager des Stützbeins (28) angeordnet ist.

6. Arbeitsgerät nach Anspruch 5, **dadurch gekennzeichnet, dass** auf den beiden einander abgewandten Breitseitenflächen der Membran (60) jeweils ein parallel zur Scherebene (62) verlaufender Dehnmessstreifen (DMS1 bis DMS4) angeordnet ist, und dass die Dehnmessstreifen in einer vorzugsweise als Brückenschaltung ausgebildeten Messschaltung (44) miteinander verbunden sind.

7. Arbeitsgerät nach einem der Ansprüche 3 bis 6, **dadurch gekennzeichnet, dass** die auf den beiden Breitseitenflächen der Membran (60) angeordneten Dehnmessstreifen schräg zur Abstützrichtung ausgerichtet sind.

8. Arbeitsgerät nach Anspruch 7, **dadurch gekennzeichnet, dass** die auf den beiden Breitseitenflächen der Membran angeordneten Dehnmessstreifen (DMS1 bis DMS4) einander paarweise unter einem Winkel vom 45° bis 90° kreuzen.

9. Arbeitsgerät nach einem der Ansprüche 1, 2 oder 6 bis 8, **dadurch gekennzeichnet, dass** die Messschaltung (44) an eine computergestützte Auswerteelektronik (48, 50) angeschlossen ist.

10. Arbeitsgerät nach einem der Ansprüche 1 bis 9, **dadurch gekennzeichnet, dass** der Anlenkbolzen (32) an einem über den Stützbeinkasten überstehenden Teil ein Gehäuse (76) zur Aufnahme einer Mess- und Auswerteelektronik (44,68) trägt.

11. Arbeitsgerät nach Anspruch 9 oder 10, **dadurch gekennzeichnet, dass** die Auswerteelektronik (48, 50) eine Softwareroutine zur Bestimmung einer Standsicherheitszahl (S) aus dem Quotienten aus der Gesamtsumme der Stützlastmesswerte aller Stützbeine und einer Teilsumme der Stützlastmesswerte der beiden augenblicklich höchstbelasteten Stützbeine, sowie eine Alarmroutine zur Auslösung eines Alarmzustands bei Unterschreiten eines vorgegebenen Schwellenwerts für die Standsicherheitszahl aufweist.

12. Arbeitsgerät nach Anspruch 10 oder 11, **dadurch gekennzeichnet, dass** der alarmauslösende Schwellenwert zwischen 1,05 und 1,25 liegt.

13. Arbeitsgerät nach einem der Ansprüche 10 bis 12, **dadurch gekennzeichnet, dass** mehrere abgestufte Schwellenwerte ($S_1$, $S_2$, $S_3$) für die Standsicherheit alarmauslösend sind.

14. Arbeitsgerät nach Anspruch 13, **dadurch gekennzeichnet, dass** bei Unterschreiten eines ersten Schwellenwerts ($S_1$) ein akustisches und/oder optisches Signal auslösbar ist.

15. Arbeitsgerät nach Anspruch 14, **dadurch gekennzeichnet, dass** bei Unterschreiten eines zweiten, gegenüber dem ersten niedrigeren Schwellenwerts ($S_2$) eine lösbare Blockierung einer lastverschiebenden Arbeitsbewegung auslösbar ist.

16. Arbeitsgerät nach Anspruch 15, **dadurch gekennzeichnet, dass** bei Unterschreiten eines dritten, gegenüber dem zweiten niedrigeren Schwellenwerts ($S_3$) eine unlösbare Blockierung der lastverschiebenden Arbeitsbewegung auslösbar ist.

**Claims**

1. Mobile work device, in particular mobile concrete pump, with a vehicle chassis (10), with two front and two rearward supporting extension arms (22, 24) extendable from a travel position to at least one support position and supportable upon a foundation (36) with respectively one telescopic support leg (28), and with respectively one measuring member (38) for determining the support load on the support legs (28), wherein the telescopic support legs. (28) have a telescope member (30) rigidly connected to the extension arm, and a support leg casing (26) coupled by means of a linkage bolt (32), and the linkage bolt (32) is designed as a measuring member (38) for determining the support load, **characterized by** a device for determining the elastic bending of the linkage bolt (32) occurring during the supporting process is used as the gauge for determining the support load specific to the support leg, wherein the linkage bolt (32) includes two longitudinal grooves (54) lying opposite to each other with reference to a bending plane (52), open towards oppositely facing sides for receiving of respectively two tension measuring strips (DMS1, DMS3 or DMS2, DMS4), and the contacts of the tension measuring strips are connected with each other in a measurement circuit (44) in the form of a bridge circuit.

2. Working device according to Claim 1, thereby **characterized**, that the linkage bolt (32) exhibit a one-side open central bore (55') as well as a transverse bore (55") running from the at least one longitudinal groove (54) to the central bore for receiving a measurement cable.

3. Mobile work device, in particular mobile concrete pump, with a vehicle chassis (10), with two front and two rearward supporting extension arms (22, 24) extendable from a travel position to at least one support position and supportable upon a foundation (36) with respectively one telescopic support leg (28), and with respectively one measuring member (38) for determining the support load on the support legs (28), wherein the telescopic support legs (28) have a telescope member (30) rigidly connected to the extension arm, and a support leg casing (26) coupled by means of a linkage bolt (32), and the linkage bolt (32) is designed as a measuring member (38) for determining the support load, **characterized by** a device for determining the elastic shear strain occurring during the supporting process in the area of the bearing locations (56) of the linkage bolt (32) as value for the support leg relevant support load, wherein the linkage bolt (32) in the area of the bearing locations (56) includes at least one through hole (58) oriented in the direction of supporting, in which a membrane (56) connected with the bolt material is provided, which carries at least one tension measuring strip (DMS1 through DMS4).

4. Work device according to claim 3, **characterized in that** the membrane is connected unitarily with the bolt material.

5. Working device according to Claim 3 or 4, thereby **characterized**, that the linkage bolt (32) on both bearing locations (56) respectively exhibits one through hole (58) with membrane (56), wherein the membrane is provided in the shear plane (62) between an inner and an outer bearing of the support leg (28).

6. Working device according to Claim 5, thereby **characterized**, that on each of the two broadside surfaces of the membrane (60) facing away from each other respectively one parallel to the shear plane (62) running tension measuring strip (DMS1 through DMS4) is provided, and that the tension measuring strips are connected with each other in a measuring circuit (44), preferably in the form of a bridge circuit (12).

7. Working device according to one of Claims 3 through 6, thereby **characterized**, that the tension measuring strips provided on the two broad surfaces of the membrane (60) are oriented diagonal to the direction of support.

8. Working device according to Claim 7, thereby **characterized**, that the two tension measuring strips (DMS1 through DMS4) provided on the two broad surfaces of the membrane cross each other pairwise at an angle of from 45° to 90°.

9. Working device according to one of Claims 1, 2 or 6 through 8, thereby **characterized**, that the measurement circuit (44) is connected with a computer supported evaluation unit (48, 50).

10. Working device according to one of Claims 1 through 9, thereby **characterized**, that the linkage bolt (32) carries on its part projecting beyond the support leg casing a housing part (76) for receiving a measuring and evaluation unit (44, 68).

11. Working device according to Claim 9 or 10, thereby **characterized**, that the evaluation electronic (48, 50) includes a software routine for determining a stability safety value (S) from the quotients of the total sum of the support load measured values of all support legs and a partial sum of the support load measured value of the two momentarily most highly loaded support legs, as well as an alarm routine for triggering an alarm condition upon exceeding a predetermined threshold value for the stability safety value.

12. Working device according to Claims 10 or 11, thereby **characterized**, that the alarm triggering threshold value is between 1.05 and 1.25.

13. Working device according to one of Claims 10 through 12, thereby **characterized**, that multiple staged or stepped threshold values ($S1$, $S_2$, $S_3$) trigger alarms for stability safety.

14. Working device according to Claim 13, thereby **characterized**, that upon dropping below a first threshold value ($S_1$) an acoustic and/or optical signal can be triggered.

15. Working device according to Claim 14, thereby **characterized**, that upon dropping below of a second threshold value ($S_2$) of a lower value than the first, a releasable blocking of a load displacing work process can be triggered.

**16.** Working device according to Claim 15, thereby **characterized**, that upon dropping below a third threshold value ($S_3$) lower in value than the second, a non-override blocking of the load displacement working process can be initiated.

## Revendications

**1.** Engin de travail mobile, notamment pompe à béton sur camion, avec un châssis (10), avec deux bras stabilisateurs avant (22) et deux bras stabilisateurs arrière (24), pouvant être déployés d'une position de marche dans au moins une position d'appui et pouvant s'appuyer chacun sur un sol (36) par une béquille télescopique (28), et avec un élément de mesure respectif (38) pour déterminer la force d'appui dans les béquilles (28), sachant que les béquilles télescopiques (28) sont, par un élément télescopique (30) solidaire du bras, articulées au moyen d'un pivot d'articulation (32) à un caisson de béquille (26), et que le pivot d'articulation (32) est conçu comme élément de mesure (38) pour déterminer la charge d'appui, **caractérisé par** un dispositif pour déterminer la flexion élastique du pivot d'articulation (32), survenant lors du processus d'appui, comme mesure de la charge d'appui agissant sur la béquille, sachant que le pivot d'articulation (32) présente deux rainures longitudinales (54) en vis-à-vis par rapport à un plan de flexion (52), ouvertes vers des côtés opposés et destinées à recevoir chacune deux jauges extensométriques (respectivement DMS1, DMS3 et DMS2, DMS4), et que les connexions des jauges extensométriques sont mutuellement reliées dans un circuit de mesure (44) réalisé sous forme de circuit en pont.

**2.** Engin de travail selon la revendication 1, **caractérisé en ce que** le pivot d'articulation (32) présente un perçage central (55') ouvert d'un côté, ainsi qu'un perçage transversal (55") s'étendant de la rainure longitudinale au moins unique (54) au perçage central et destiné à recevoir un câble de mesure.

**3.** Engin de travail mobile, notamment pompe à béton sur camion, avec un châssis (10), avec deux bras stabilisateurs avant (22) et deux bras stabilisateurs arrière (24), pouvant être déployés d'une position de marche dans au moins une position d'appui et pouvant s'appuyer chacun sur un sol (36) par une béquille télescopique (28), et avec un élément de mesure respectif (38) pour déterminer la force d'appui dans les béquilles (28), sachant que les béquilles télescopiques (28) sont, par un élément télescopique (30) solidaire du bras, articulées au moyen d'un pivot d'articulation (32) à un caisson de béquille (26), et que le pivot d'articulation (32) est conçu comme élément de mesure (38) pour déterminer la charge d'appui, **caractérisé par** un dispositif pour déterminer la déformation de cisaillement élastique, survenant lors du processus d'appui dans la région de paliers (56) du pivot d'articulation (32), comme mesure de la charge d'appui agissant sur la béquille, sachant que le pivot d'articulation (32) présente dans la région des paliers (56) au moins un percement (58) dirigé dans la direction d'appui et dans lequel est disposée une membrane (60) reliée au matériau du pivot, laquelle porte au moins une jauge extensométrique (DMS1 à DMS4).

**4.** Engin de travail selon la revendication 3, **caractérisé en ce que** la membrane est reliée d'un seul tenant au matériau du pivot.

**5.** Engin de travail selon la revendication 3 ou 4, **caractérisé en ce que** le pivot d'articulation (32) présente au niveau de chacun des deux paliers (56) un percement (58) doté d'une membrane (60), sachant que la membrane est disposée dans le plan de cisaillement (62) entre un palier intérieur et un palier extérieur de la béquille (28).

**6.** Engin de travail selon la revendication 5, **caractérisé en ce qu'**une jauge extensométrique respective (DMS1 à DMS4) s'étendant parallèlement au plan de cisaillement (62) est disposée sur chacune des deux faces latérales larges mutuellement opposées de la membrane (60), et **en ce que** les jauges extensométriques sont mutuellement reliées dans un circuit de mesure (44) réalisé de préférence sous forme de circuit en pont.

**7.** Engin de travail selon l'une des revendications 3 à 6, **caractérisé en ce que** les jauges extensométriques disposées sur les deux faces latérales larges de la membrane (60) sont orientées en oblique par rapport à la direction d'appui.

**8.** Engin de travail selon la revendication 7, **caractérisé en ce que** les jauges extensométriques (DMS1 à DMS4) disposées sur les deux faces latérales larges de la membrane (60) se croisent mutuellement par paires sous un angle de 45˚ à 90˚.

**9.** Engin de travail selon l'une des revendications 1, 2 ou 6 à 8, **caractérisé en ce que** le circuit de mesure (44) est raccordé à une unité électronique d'interprétation (48, 50) assistée par ordinateur.

**10.** Engin de travail selon l'une des revendications 1 à 9, **caractérisé en ce que** le pivot d'articulation (32) porte, dans une partie dépassant du caisson de béquille, un boîtier (76) destiné à recevoir une unité électronique d'interprétation (44, 68).

**11.** Engin de travail selon la revendication 9 ou 10, **ca-**

**ractérisé en ce que** l'unité électronique d'interprétation (48, 50) présente une routine logicielle pour déterminer un coefficient (S) de stabilité au basculement formé par le quotient de la somme totale des valeurs de mesure de charge d'appui de toutes les béquilles et d'une somme partielle des valeurs de mesure de charge d'appui des deux béquilles momentanément les plus sollicitées, ainsi qu'une routine d'alarme pour déclencher un état d'alarme si le coefficient de stabilité au basculement tombe en dessous d'une valeur de seuil prédéfinie.

**12.** Engin de travail selon la revendication 10 ou 11, **caractérisé en ce que** la valeur de seuil déclenchant l'alarme se situe entre 1,05 et 1,25.

**13.** Engin de travail selon l'une des revendications 10 à 12, **caractérisé en ce que** plusieurs valeurs de seuil échelonnées ($S_1$, $S_2$, $S_3$) déclenchent l'alarme de stabilité au basculement.

**14.** Engin de travail selon la revendication 13, **caractérisé en ce qu'**un signal acoustique et/ou optique peut être déclenché si l'on tombe en dessous d'une première valeur de seuil ($S_1$).

**15.** Engin de travail selon la revendication 14, **caractérisé en ce qu'**un blocage libérable d'un mouvement de travail déplaçant la charge peut être déclenché si l'on tombe en dessous d'une deuxième valeur de seuil ($S_2$), inférieure à la première.

**16.** Engin de travail selon la revendication 15, **caractérisé en ce qu'**un blocage non libérable du mouvement de travail déplaçant la charge peut être déclenché si l'on tombe en dessous d'une troisième valeur de seuil ($S_3$), inférieure à la deuxième.

Fig.1

Fig.2

Fig.3a

Fig.3b

Fig.4a

Fig.4b

Fig.5a

Fig.5b

Fig.6a

Fig.6b

Fig.7

DMS1

DMS2

DMS3

DMS4

$$S = \frac{F_1 + F_2 + F_3 + F_4}{\hat{F}_a + \hat{F}_b}$$

EP 1 675 760 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10110176 A
- JP 2000095074 A